# EUROPEAN PATENT SPECIFICATION

(11) **EP 4 353 774 B1**
(45) Date of publication and mention of the grant of the patent: **10.09.2025**
(21) Application number: 22382958.1
(22) Date of filing: 10.10.2022
(51) Int. Cl.: C08J 11/24, C08J 11/28

(54) **LOW-TEMPERATURE ORGANOCATALYZED DEPOLYMERIZATION OF POLY(ETHYLENE TEREPHTHALATE)**
ORGANOKATALYSIERTE DEPOLYMERISATION VON POLYETHYLENTEREPHTHALAT BEI NIEDRIGER TEMPERATUR
DÉPOLYMÉRISATION DE POLYTÉRÉPHTALATE D'ÉTHYLÈNE PAR CATALYSE ORGANIQUE À BASSE TEMPÉRATURE

(43) Date of publication of application: 17.04.2024
(73) Proprietor: Polykey Polymers, S.L., 20018 Donostia-San Sebastián (ES); Universidad del País Vasco/Euskal Herriko Unibertsitatea, 48940 Leoia, Bikaia (ES); Basque Center for Macromolecular Design and Engineering, POLYMAT Fundazioa, 20018 Gipuzkoa (ES)
(72) Inventor: JEHANNO, Coralie, 20018 Donostia-San Sebastián (ES); OLAZABAL LOREA, Ion, 48940 Leioa - Vizcaya (ES); SARDÓN MUGURUZA, Haritz, 48940 Leioa - Vizcaya (ES); LUNA BARRIOS, Emelin Yhoany, 20018 Donostia-San Sebastián, Gipuzkoa (ES)
(74) Representative: ABG Intellectual Property Law, S.L.

(56) References cited:
- WO-A1-2016/101938
- WO-A1-2021/126661
- WO-A1-2021/126939
- JP-B2- 6 442 352
- SINA CHAEICHIAN ET AL: "Synthesis of Unsaturated Polyester Resins from PET Wastes: Effect of a Novel Co-catalytic System on Glycolysis and Polyesterification Reactions", DESIGNED MONOMERS AND POLYMERS, vol. 11, no. 2, 2 April 2012 (2012-04-02), pages 187 - 199, XP055473744, DOI: 10.1163/156855508X298080
- FUKUSHIMA KAZUKI ET AL: "Unexpected efficiency of cyclic amidine catalysts in depolymerizing poly(ethylene terephthalate)", JOURNAL OF POLYMER SCIENCE PART A: POLYMER CHEMISTRY, vol. 51, no. 7, 9 January 2013 (2013-01-09), US, pages 1606 - 1611, XP093027246, ISSN: 0887-624X, Retrieved from the Internet <URL:https://api.wiley.com/onlinelibrary/tdm/v1/articles/10.1002%2Fpola.26530> DOI: 10.1002/pola.26530

## Description

### FIELD OF THE INVENTION

The invention relates to a low-temperature organocatalyzed process for the depolymerization of PET-containing materials (PET: polyethylene terephthalate), said process involving the use of the combination of an organic solvent and a catalytic system composed of an organic base and an inorganic base, to afford terephthalate- and terephthalamide-based chemicals via transesterification and transamidation, respectively, of a nucleophile along the PET polymeric chain. The process does not require pretreatment or prior purification of PET wastes and avoids energy-intensive steps and expensive equipment as it can be carried out in conventional reactors at a temperature equal to or lower than 100 °C, under ambient pressure for short reaction times.

### BACKGROUND

More than 27 B tons of PET have been produced in 2019. This well-known polymer is the most recycled plastic in the world. However, although nearly 70% of packaging wastes - majorly PET, PP and PE - have been collected in 2018 in Europe, more than 50% are directly going from the collection centres to landfill or incineration and never reach the recycling plants because they are considered too polluted for being recycled. Moreover, even after entering the process of mechanical recycling, the sorting, cleaning, and grinding procedure applied to the various sources of plastic waste account for a loss of about 10-40% depending on the origin of the waste. Indeed, PET mixed with plastics, coloured PET, PET with labels, PET mixed with metal and much more, are evicted from the recycling line during the process to maintain the final quality of recycled PET (rPET). The only way of reducing these losses during the process is a selective chemical recycling procedure, the development of a technology in which PET wastes which are not "pure" enough for mechanical recycling can find a second life in an efficient manner.

The chemical recycling of PET has emerged as a powerful and selective method, which consists in the depolymerisation of the polymeric material into small molecules, *i.e.* its starting units (the monomer(s)) or other chemicals susceptible of being used for added-value applications. However, two main problems have impeded the large-scale industrialization of PET chemical recycling techniques. First, because of the high thermal and chemical stability of PET, typically harsh conditions are required to break the polymeric chain, involving strong catalysts (organometallics, rare earth complexes, metallic ionic liquids, ...), high temperature (>180 °C), high pressure, supercritical fluids, microwaves, irradiation or combinations of thereof. Such harsh reaction conditions represents a significant obstacle to scaling up to industrial settings. The few studies available in literature still need significant improvements to become industrially viable. So far, either the energy cost is too high, or the investment needed for scaling up is too risky. Secondly, the nature of the PET wastes may affect the viability of the depolymerization process. The plastic waste to be recycled is usually a complex mixture containing different types of materials such as other polymers (polyethylene, polypropylene, polycarbonate, polyurethane, polyamide, etc.) paper, metals, or organic wastes while PET waste contains additives such as colourants, flame-retardants or structural modifiers. This variety and heterogeneity in the plastic waste stream to be treated implies that depolymerisation techniques need to be specific for PET in order to be efficient. Up to date, a truly selective depolymerisation has been seldom reported and none of the studies constitutes a proof-of-concept for depolymerization at industrial scale.

| **Company** | **Patent** | **T (°C)** | **Time (h)** | **Catalyst** | **Drawbacks** |
|---|---|---|---|---|---|
| **Ioniqa** | WO2016105198 A1 | 200 | 1-3 | Nanoparticles | Complex purification |
| Netherlands | | | | | |
| **Gr3n** | WO2013014650 A1 | 200-250 | 1 | Unknown | Microwaves required |
| Italy | | | | | |
| **DePoly** | WO2020173961 A1 | 25 | 6-9 | Titanium oxide | UV lamps & concentrated acid |
| Swiss | | | | | |
| **IBM** | WO2015056377 A1 | 180-220 | 1-2 | Organocatalyst | Do not work with dyes |
| USA | | | | | N₂ required |
| **JEPLAN** | WO2013175497 A1 | 220 + 200 | 1+2 | Metallic oxide | Two-steps reaction |
| Japan | | | | | Complex purification |
| **LOOP INDUSTRIES** | WO2017007965 A1 | 25 | 24-48 | Alkaline (>20%) | High amount of solvent and catalyst |
| USA | | | | | |

In WO2016105198A1, Ioniqa discloses a process, which involves glycolysis in the presence of magnetic nanoparticles as a catalyst at high temperature (150-200 °C). Although the catalyst can be recycled and coloured PET can be treated, a life cycle analysis (LCA) has shown that, despite the better environmental balance than incineration, the technology is more energy intensive than any mechanical recycling technology.

WO2013014650A1 discloses a versatile technology, which can recycle different types of PET waste within short reaction times (less than 1 h) but requires very high temperatures (200-250 °C) and a microwave reactor, which involves considerable energy costs and investment for specialized equipment.

WO2020173961A1 discloses the depolymerisation of several types of PET with a process at room temperature that takes 6-8 h but requires UV radiation, which entails significant and risky investments in industrial settings.

As disclosed in WO2015056377A1, IBM employs an organocatalytic process operating within short reaction times (1-2 hours) but high temperatures (>180 °C) are required while inert nitrogen atmosphere is needed to avoid catalyst deactivation. Additionally, IBM technology demonstrated suboptimal performance with PET containing colorants (<50% of yield for some common colourants), which is a serious drawback for industrialization with real plastic wastes.

The technology developed by JEPLAN (WO2013175497A1) is a 2-step reaction (thus, the scaling up is more challenging compared to a single step procedure) requiring high temperatures (over 200 °C) and a complex purification procedure.

WO2017007965A1 describes a process developed by LOOP Industries which only employs commercially available solvents and inorganic bases at room temperature. The process appears to be an energetically favourable process achieving a decent yield of product (80%) but very long reaction times (> 24h) as well as very large quantities of solvent and inorganic base are required.

Of all the processes described above, only Ioniqa has a functioning industrial plant, though the high energy cost represents an important drawback.

Several research groups have also investigated the depolymerization of PET but only three examples describe low temperature-depolymerization (at < 100 °C). Disclosed in WO2021126939A1 (by Eastman) is a process for the glycolysis of polyester in the presence of a catalyst that can be a N-containing base and/or an alkaline or alkaline-earth metal (in)organic salt. However, this patent does not disclose such a process where both types of catalysts are used in combination with the use of an aprotic solvent.

Tanaka et al. (Green Chem., 2021, 23, 9412-9416) report the depolymerisation of PET catalysed by alkali metal methoxide (particularly lithium salts) through methanolysis at mild temperature. Dimethyl carbonate (DMC) is used as trapping agent for obtaining good depolymerization conversions in 5-6 hours. Since the reaction is performed in methanol, which is at the same time the nucleophile, the process is inherently limited to methanolysis and temperatures lower than methanol boiling point (65 °C). Additionally, to afford good depolymerisation rates, it is necessary to add DMC, producing ethylene carbonate as by-product which needs to be removed from the crude mixture.

Dinh Pham et al. (Green Chem., 2021, 23, 511-525) describe a catalytic route for the methanolysis of PET into dimethyl terephthalate (DMT). Potassium carbonate (K₂CO₃) is used as catalyst, and the effects of co-solvents on the catalytic performance are investigated. DMT is obtained in good yields only after long reaction times (typically > 24 h). Another drawback of this report is that good depolymerisation rates are only obtained with transparent and clean PET waste as coloured PET does not completely depolymerize, even after 24 h. Nucleophiles other than methanol have not been employed for this reaction and, since methanol is a co-solvent, the scope of nucleophiles might be challenging to expand.

Zhang et al. (Green Chem., 2022, 24, 3284-3292) describe the recycling of PET in a mixture of tetrahydrofuran (THF) and ethylene glycol by using water as nucleophile and large quantities of potassium hydroxide (KOH) to obtain terephthalic acid (TPA). The reaction reaches complete degradation of PET after 1 h at 60 °C. Although the reaction is fast under mild conditions, it only achieves the hydrolysis of PET to TPA, while other added-value products are not described. Large quantities of highly basic water (1.5 eq. of KOH compared to PET) are required to afford complete degradation of PET.

Looking at the prior art, all types of chemical recycling technologies share two major drawbacks: high energy input, and complex and expensive technologies for large scale implementation (e.g. radiation or microwaves).

### BRIEF DESCRIPTION OF THE INVENTION

As a simple alternative for resolving the two above-mentioned issues, the inventors have developed a novel depolymerisation method of PET that is sustainable, easy to implement and PET-selective even in presence of other types of plastic monomers and/or plastic additives and/or contaminants. The present invention employs mild conditions: ambient pressure, low temperature, organocatalysis and widely available alkaline bases for breaking PET into derivatives of its monomeric units, namely terephthalates such as dimethyl terephthalate (DMT), bis-hydroxyethyl terephthalate (BHET), terephthalamides, etc.

The depolymerisation of PET proceeds at low temperature (between room temperature and 100 °C) to selectively recycle PET alone, mixed with other types of plastics or PET with additives, such as colourants, even when they are in the form of blends or very thin films. No further sources of energy (supercritical fluids, pressure, microwaves, light irradiation, etc.) are required. More specifically, the invention describes the use of an organic base along with an alkaline or alkaline-earth metal organic or inorganic salt as catalytic system for the synthesis of terephthalate-, thio-terephthalate- and terephthalamide-based chemicals from the depolymerisation of PET through the transesterification, transthiolesterification or transamidation of a nucleophile on the polymeric chain in an aprotic solvent (such as THF, 2-methyl-THF, DCM, CHCl₃, gamma-valerolactone, acetonitrile, or 1-methylimidazole) at low temperature and in a short reaction time.

The PET waste is treated with an excess of nucleophile which can be an alcohol, an amine, or a thiol, and a catalytic amount of an organic base along with a catalytic amount of a protective alkaline or alkaline-earth metal organic or inorganic salt, in an organic solvent under stirring. After the appropriate reaction time, the PET is completely transformed into the corresponding terephthalate monomeric derivative. Directly after the reaction, an optional work-up of the reaction mixture can be performed. The work-up may comprise the addition of water to the crude mixture in order to induce the precipitation of the terephthalate monomeric product while the catalytic system and the solvent remain in the liquid phase. The work-up may further comprise the filtration of the solid product allowing to obtain the terephthalate product in high purity.

Thus, one aspect of the invention relates to a process of depolymerisation of poly(ethylene terephthalate) comprising:
reacting a sample comprising poly(ethylene terephthalate) with a nucleophile, said nucleophile being in equivalent excess with respect to the poly(ethylene terephthalate) monomeric units,
wherein the nucleophile is a compound of formula (I):

   X-R₁-Y (I)
wherein:
   X is selected from -OH, -SH and -NH₂;
   Y is selected from H, -OH, -SH and -NH₂;
   R₁ is selected from linear or branched C₁-C₈ alkylene, optionally having -O- or - NH- groups intercalated in the alkylene chain; C₃-C₁₀ cycloalkylene, optionally substituted with at least one C₁-C₄ alkyl; C₃-C₁₀ heterocycloalkylene, optionally substituted with at least one C₁-C₄ alkyl; C₆-C₁₀ arylene, optionally substituted with a C₁-C₄ alkyl; C₆-C₁₀ heteroarylene, optionally substituted with a C₁-C₄ alkyl; (C₆-C₁₀)arylene(C₁-C₄)alkylene; and (C₃-C₁₀)cycloalkylene(C₁-C₄)alkylene;
   in the presence of:
      - a catalytic system comprising:
         - a N-containing organic base, and
         - an alkaline or alkaline-earth metal organic or inorganic salt,
      - and an aprotic solvent.

The process of the invention is, for the first time, combining the following four main aspects which are essential for industrial scaling-up:
1. low-temperature and ambient pressure process without further input of energy, which minimizes the energy cost;
2. inexpensive and non-toxic catalytic system (comprising an organic base/alkaline or alkaline-earth metal organic or inorganic salt);
3. fast reaction times (<2h);
4. product selectivity even in presence of common contaminants (other plastics, metals, dyes, organic residues, laminates, textiles, etc.).

### DETAILED DESCRIPTION OF THE INVENTION

As stated above, the main aspect of the invention relates to a process of depolymerisation of poly(ethylene terephthalate) comprising:
reacting a sample comprising poly(ethylene terephthalate) with a nucleophile, said nucleophile being in equivalent excess with respect to the poly(ethylene terephthalate) monomeric units,
wherein the nucleophile is a compound of formula (I):

   X-R₁-Y (I)
wherein:
   X is selected from -OH, -SH and -NH₂;
   Y is selected from H, -OH, -SH and -NH₂;
   R₁ is selected from linear or branched C₁-C₈ alkylene, optionally having -O- or - NH- groups intercalated in the alkylene chain; C₃-C₁₀ cycloalkylene, optionally substituted with at least one C₁-C₄ alkyl; C₃-C₁₀ heterocycloalkylene, optionally substituted with at least one C₁-C₄ alkyl; C₆-C₁₀ arylene, optionally substituted with a C₁-C₄ alkyl; C₆-C₁₀ heteroarylene, optionally substituted with a C₁-C₄ alkyl; (C₆-C₁₀)arylene(C₁-C₄)alkylene; and (C₃-C₁₀)cycloalkylene(C₁-C₄)alkylene;
   in the presence of:
      - a catalytic system comprising:
         - a N-containing organic base, and
         - an alkaline or alkaline-earth metal organic or inorganic salt,
      - and an aprotic solvent.

The starting material can be any source of PET, in a pure form or in presence of contaminants, moreover any physical form and shape of the sample comprising PET would be suitable to carry out the process of the invention. Preferably, fibers, flakes, chunks, spheres, pellets, and the like, are generally made available in bulk in a substantially uniform particle size.

In some embodiments, the sample comprising polyethylene terephthalate also comprises contaminants, such as additional polymers (for example polyethylene, polypropylene, polyvinyl chloride (PVC), polycarbonates (PCs), polyurethanes (PUs), and polyamides (PAs), paper, colorants, dirt, metals, inorganic fillers, ethylene vinyl alcohol (EVOH), ethylene vinyl acetate (EVA), cellulose, glue, or any combination thereof. In some embodiments, the sample comprising polyethylene terephthalate also comprises between about 5% and about 30% contaminants.

Bottle grade PET is preferred, in particular bottle grade PET pellets. Bottle grade PET pellets can be obtained according to procedures known in the art, particularly by grinding of disposed PET bottles. The resulting pellets may be of different size, such as 0.1 to 2 cm, preferably the pellets size is about 1±0.5 cm.

### Definitions

Unless the context requires otherwise, throughout the specification and claims which follow, the word "comprise" and variations thereof, such as, "comprises" and "comprising" are to be construed in an open, inclusive sense, that is, as "including, but not limited to." Further, headings provided herein are for convenience only and do not interpret the scope or meaning of the claimed invention.

As used herein, the singular forms "a," "an," and "the" include plural referents unless the content clearly dictates otherwise. It should also be noted that the term "or" is generally employed in its sense including "and/or" unless the content clearly dictates otherwise. As used herein, the term "about" or "approximately" means within 10%, preferably within 10%, and more preferably within 5% of a given value or range.

As used herein, depolymerization refers to a way of breaking down a polymer to its starting material. It is essentially the opposite of polymerization. In some embodiments, the depolymerization is achieved by alcoholysis, aminolysis or thiolysis, preferably by by alcoholysis or aminolysis. In some embodiments, the depolymerization is achieved by alcoholysis. In some embodiments, the depolymerization is achieved by aminolysis.

### Nucleophile

The depolymerization affords the breaking of the polymeric chain of the PET precursor through nucleophilic attack into terephthalic acid molecule derivatives. The structure of said derivatives will depend on the nucleophile employed.

The nature of the nucleophile may vary structurally according to the general formula (I):

X-R₁-Y (I)

wherein X, Y and R₁ are defined as above.

Depending on the chemical nature of the groups X and Y, the nucleophile could be an alcohol, a diol, an amine, an amino alcohol, an amino thiol, or a mercaptol. Thus, the depolymerisation of PET chain with said nucleophile may give rise to ester, amide or thioester derivatives of terephthalic acid.

The group X may differ from or be equal to the group Y.

In a particular embodiment the group X is -OH or -NH₂. In another embodiment the group X is -OH. In yet another embodiment the group X is -NH₂.

In a preferred embodiment the group Y is -H, -OH or -NH₂. In another embodiment the group Y is -H. In another embodiment the group Y is -OH. In yet another embodiment the group Y is -NH₂.

In a particular embodiment X is -OH or -NH₂, and Y is -H, -OH or -NH₂. In another embodiment, X is -OH and Y is -H, -OH or -NH₂. In a preferred embodiment, X and Y are both a -OH group. In another preferred embodiment X and Y are -OH and -NH₂, respectively. In yet another preferred embodiment, X is -OH and Y is -X.

Preferred classes of nucleophiles are primary alcohols, diols, primary amines, and aminoalcohols.

The group R₁ is an organic spacer between the groups X and Y and may include a variety of organic moieties of different length. Preferred R₁ groups are defined as above.

The term "C₁-C₈ alkylene" designates a divalent group having from one to eight carbon atoms. Such group can be linear or branched and can have -O- or -NH- groups intercalated in the alkylene chain. Examples of C₁-C₈ alkylene groups include -CH₂-CH₂-, -CH₂-CH₂-CH₂-, -CH₂-CH₂-CH₂-CH₂-, -CH₂-CH₂-CH₂-CH₂-CH₂-, -CH(CH₃)-CH₂-,-CH(CH₃)-CH(CH₃)-, -C(CH₃)₂-CH(CH₃)-, -C(CH₃)₂-C(CH₃)₂-, -CH₂-C(CH₃)₂-CH₂-, -C(CH₃)₂-CH₂-C(CH₃)₂-, -CH₂-CH₂-O-CH₂-CH₂-, -CH₂-CH₂-NH-CH₂-CH₂-, -CH₂-CH₂-N(H)-CH₂-CH₂-CH₂-CH₂-N(H)-CH₂-CH₂-.

The term "C₃-C₁₀ cycloalkylene" designates a divalent cyclic saturated hydrocarbon radical of three to ten carbon atoms wherein one or two carbon atoms may be replaced by an heteroatom (O, NH or S). Examples of "C₃-C₁₀ cycloalkylene" are cyclopropylene, cyclobutylene, cyclopentylene, or cyclohexylene, and the like.

The term "C₆-C₁₀ arylene" (or arenediyl) designates a divalent radical of six to ten carbon atoms derived from an aromatic hydrocarbon (arene) which can be monocyclic or fused bicyclic systems such as phenylene and naphthalendiyl. Appropriate heteroatoms such as N, P, O and S may replace one or more carbon atoms of the arylene ring(s) leading to a "C₆-C₁₀ arylene" fragment.

In a particular embodiment, R₁ is selected from linear or branched C₁-C₈ alkylene, optionally having -O- or -NH- groups intercalated in the alkylene chain; C₃-C₁₀ cycloalkylene, optionally substituted with at least one C₁-C₄ alkyl; C₆-C₁₀ arylene, optionally substituted with a C₁-C₄ alkyl; (C₆-C₁₀)arylene(C₁-C₄)alkylene; and (C₃-C₁₀)cycloalkylene(C₁-C₄)alkylene.

In a more particular embodiment, R₁ is selected from linear or branched C₁-C₈ alkylene, optionally having -O- or -NH- groups intercalated in the alkylene chain; C₃-C₁₀ cycloalkylene, optionally substituted with at least one C₁-C₄ alkyl; and C₆-C₁₀ arylene, optionally substituted with a C₁-C₄ alkyl.

In a preferred embodiment, R₁ is a linear or branched C₁-C₄ alkylene, optionally having -O- or -NH- groups intercalated in the alkylene chain.

In a more preferred embodiment, R₁ is methylene or ethylene.

In a preferred embodiment, the nucleophile is selected from methanol, ethanol, propanol, isopropanol, butanol, isobutanol, tert-butanol, n-pentanol, isoamyl alcohol, n-hexanol, ethylene glycol, 1,3-propanediol, 1,4-butanediol, 1,5-pentanediol, 1,6-hexanediol, ethanolamine, 3-amino-1-propanol, 4-amino-1-butanol, 5-amino-1-pentanol, 6-amino-1-hexanol, ammonia, ethylamine, propylamine, butylamine, pentylamine, hexylamine, phenol, 1,4-benzenediol.

In a most preferred embodiment, the nucleophile is selected from methanol, ethylene glycol and ethanolamine.

The nucleophile is used in equivalent excess with respect to the poly(ethylene terephthalate) monomeric units, that is, if the poly(ethylene terephthalate) comprises n monomeric units, a >n amount of nucleophile molecules will be needed to carry out the process of the invention.

In an embodiment, the nucleophile is used in at least 1.1, at least 1.5, at least 2.0, at least 2.5, at least 3.0, at least 3.5, at least 4.0, at least 4.5, at least 5.0 equivalent excess with respect to the poly(ethylene terephthalate) monomeric units.

In an embodiment, the nucleophile is between 1.5 and 6.0 equivalent excess with respect to the poly(ethylene terephthalate) monomeric units, preferably between 1.5 and 4.5 equivalent excess with respect to the poly(ethylene terephthalate) monomeric units, more preferably between 2.0 and 4.0 equivalent excess with respect to the poly(ethylene terephthalate) monomeric units, even more preferably between 2.5 and 3.5 equivalent excess with respect to the poly(ethylene terephthalate) monomeric units.

In a most preferred embodiment, the nucleophile is used in about 3.0 equivalent excess with respect to the poly(ethylene terephthalate) monomeric units.

### Catalytic system

The depolymerisation process of the invention occurs under catalytic conditions in presence of a catalytic system comprising:
- a N-containing organic base, and
- an alkaline or alkaline-earth metal organic or inorganic salt.

The N-containing organic base may include a variety of organic compounds comprising at least a nitrogen atom. In particular, the nitrogen atom(s) may be comprised in organic compounds such as amines, imines, guanidines and N-heterocyclic compounds (aromatic and non-aromatic).

In an embodiment, the N-containing organic base is selected from the following: 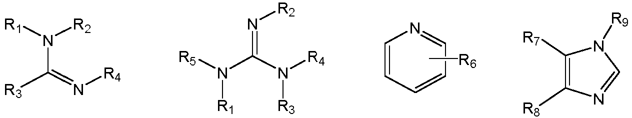 or any tautomeric form thereof,
wherein R₁, R₂, R₃, R₄ and R₅ are independently selected from H and linear or branched C₁-C₄ alkyl, C₁-C₄ alkoxyl, C₁-C₄ alkylamine, and wherein R₁ and R₃ and/or R₂ and R₄ can be bonded to form a heterocyclyl group;
R₆, R₇ and R₈ are independently selected from H, linear or branched C₁-C₄ alkyl, C₃-C₁₀ cycloalkyl, C₁-C₄ alkoxyl, C₁-C₄ alkylamine and C₆-C₁₀ aryl or R₇ and R₈ can be bonded to form a ring fused with the N-containing ring; and
R₉ is selected from H and linear or branched C₁-C₄ alkyl, C₁-C₄ alkoxyl and C₁-C₄ alkylamine.

A "C₁-C₄ alkyl" designates a monovalent radical group, branched or linear, having from one to four carbon atoms. Such group can have -O- or -NH- groups intercalated in the alkyl chain. Examples of C₁-C₄ alkyl groups include methyl, ethyl propyl, isopropyl, butyl, isobutyl, sec-butyl, tert-butyl, -CH₂OCH₂CH₃, -CH₂NHCH₂CH₃,-CH₂OCH₂CH₂OCH₃, CH₂OCH₂CH₂NHCH₃, etc.

The term "C₃-C₁₀ cycloalkyl" designates a monovalent cyclic saturated hydrocarbon radical of three to ten carbon atoms wherein one or more carbon atoms may be replaced by an heteroatom (O, NH or S). Examples of "C₃-C₁₀ cycloalkylene" are cyclopropyl, cyclobutyl, cyclopentylene, or cyclohexyl, and the like.

A "C₁-C₄ alcoxyl" designates a monovalent radical group having from one to four carbon atoms. Such group can be linear or branched and has a -OH group at one terminus of the C1-C4 carbon chain.

A "C₁-C₄ alkylamine" designates a monovalent radical group having from one to four carbon atoms. Such group can be linear or branched and has a -NH₂ group at one terminus of the C₁-C₄ carbon chain.

In an embodiment, the N-containing organic base is selected from the structures shown above, wherein R₁, R₂, R₃ and R₄ are independently a linear or branched C₁-C₄ alkyl group or wherein R₁ and R₃ and/or R₂ and R₄ are bonded to form a C₃-C₁₀ heterocyclyl group. In another embodiment, the N-containing organic base is selected from the structures shown above, wherein the R₅, R₆, R₇, R₈ and R₉ are H.

In another embodiment, R₇ and R₈ can be bonded to form a C₃-C₁₀ heterocyclyl or a C₆-C₁₀ heteroaryl ring fused with the N-containing ring.

In another embodiment, the N-containing organic base is selected from the following structures: 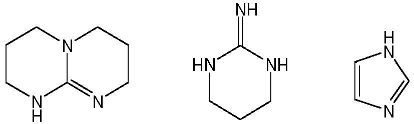 or any tautomeric form thereof.

The N-containing organic base is present in catalytic amounts. Particularly, the N-containing organic base can be up to 0.50 equivalents per equivalent of poly(ethylene terephthalate) monomeric units. In an embodiment, the N-containing organic base is used in quantities from 0.01 to 0.50 equivalents per equivalent of poly(ethylene terephthalate) monomeric units. In another embodiment, the N-containing organic base is used in quantities from 0.05 to 0.25 equivalents per equivalent of poly(ethylene terephthalate) monomeric units. The N-containing organic base is preferably used in quantities of about 0.10 equivalents per equivalent of poly(ethylene terephthalate) monomeric units.

The catalytic system also comprises an alkaline or alkaline-earth metal organic or inorganic salt. This alkaline or alkaline-earth metal organic or inorganic salt has a protective role towards the organic base, namely, it does not catalyze the reaction on its own but it does avoid the deactivation of the organic base. As the reaction always produces some terephthalic acid (derived from the hydrolysis of the PET chain with residual water) and said acid forms a very stable complex with the organic base, the organic base tends to deactivate over time leading to a poorer catalytic activity. Therefore, in an embodiment the alkaline or alkaline-earth metal organic or inorganic salt is a salt that neutralizes the terephthalic acid produced in the depolymerisation process, namely it acts as an organic or an inorganic base.

In one embodiment, the alkaline or alkaline-earth organic or inorganic salt is selected from the group comprising NaOH, NaOMe, NaOEt, NaOPr NaOtBu, KOH, KOMe, KOEt, KOiPr KOtBu, LiOH, LiOMe, LiOEt, LiOiPr, LiOtBu, Rb(OH), RbOMe, RbOEt, RbOiPr, RbOtBu CsOH, CeOMe, CsOEt, CsO iPr, CsOtBu, Fr(OH), FrOMe, FrOEt, FrO iPr, FrOtBu, Be(OH)₂, Be(OMe)₂, Be(OEt)₂, Be(OiPr)₂, Be(OtBu)₂, Mg(OH)₂, Mg(OMe)₂, Mg(OEt)₂, Mg(OiPr)₂, Mg(OtBu)₂, Ca(OH)₂, Ca(OMe)₂, Ca(OEt)₂, Ca(OiPr)₂, Ca(OtBu)₂, Sr(OH)₂, Sr(OMe)₂, Sr(OEt)₂, Sr(OiPr)₂, Sr(OtBu)₂, Ba(OH)₂, Ba(OMe)₂, Ba(OEt)₂, Ba(OiPr)₂, Ba(OtBu)₂, Ra(OH)₂, Ra(OMe)₂, Ra(OEt)₂, Ra(OiPr)₂, Ra(OtBu)₂ and combinations thereof.

In a preferred embodiment, the alkaline or alkaline-earth organic or inorganic salt is selected from NaOH, NaOMe, NaOEt, NaOPr NaOtBu, KOH, KOMe, KOEt, KOiPr KOtBu, LiOH, LiOMe, LiOEt, LiOiPr, LiOtBu and other alkaline or alkaline-earth hydroxides.

In a most preferred embodiment, the alkaline or alkaline-earth organic or inorganic salt is KOtBu.

The alkaline or alkaline-earth organic or inorganic salt is also used in sub-stoichiometric amount, equal to of differing from that of N-containing organic base. In one embodiment, the alkaline or alkaline-earth organic or inorganic base is used in higher amount than the N-containing organic base.

The alkaline or alkaline-earth organic or inorganic salt can be up to 0.80 equivalents per equivalent of poly(ethylene terephthalate) monomeric units. In one embodiment, the alkaline or alkaline-earth organic or inorganic base is present in quantities from 0.10 to 0.50 equivalents per equivalent of poly(ethylene terephthalate) monomeric units. In another embodiment, the alkaline or alkaline-earth organic or inorganic base is present in quantities from 0.15 to 0.25 equivalents per equivalent of poly(ethylene terephthalate) monomeric units. The alkaline or alkaline-earth organic or inorganic base is preferably used in quantities of about 0.20 equivalents per equivalent of poly(ethylene terephthalate) monomeric units.

### Solvent

The process of the invention also requires an aprotic solvent.

A skilled person could easily recognise the suitable aprotic solvent to be used in the process of the invention depending on the reactants and the catalytic system used.

In a preferred embodiment, the aprotic solvent is selected from the group consisting of tetrahydrofuran, 1-methylimidazole, 2-methyltetrahydrofuran, dichloromethane, chloroform, dimethyl sulfoxide, acetophenone, propiophenone, methyl benzoate, methyl acetate and combinations thereof. Even more preferable is the use of tetrahydrofuran, 1-methylimidazole, chloroform, methyl benzoate and combinations thereof.

In a particular embodiment, the sample comprising poly(ethylene terephthalate), the nucleophile and the catalytic system are mixed in the organic solvent in any order.

### Other embodiments

In a particular embodiment, the process of the invention is carried out at a temperature equal to or below 100 °C, more preferably between 15 and 100 °C, even more preferably between 40 and 100 °C, and most preferably between 60 and 100 °C.

In another particular embodiment, the process of the invention is carried out in less than 5 hours, preferably in less than 2 hours, more preferably between 5 min and 2 hours.

In some embodiments, the process of depolymerization of polyethylene terephthalate (PET) is conducted for about 5 min to about 120 min at a temperature between 60 and 100 °C.

In another particular embodiment, the process of the invention is performed under a non-protective atmosphere, i.e., an atmosphere containing oxygen.

Furthermore, the process is preferably conducted under atmospheric pressure.

An additional work up of the reaction mixture may be carried out to isolate the product in its pure form, which may be a crystalline form. Routine work-up procedures such as filtration, centrifugation, extraction, chromatography, distillation, sublimation, etc. may be applied. Due to the ease in crystallizing terephthalic acid derivatives, crystalline products can be obtained by addition of a suitable anti-solvent to the solution of the terephthalic acid derivative product. The compounds resulting from the process of the invention can be further purified once obtained using conventional techniques, such as column chromatography and liquid-liquid extraction. Among these products are bis(2-hydroxyethyl)terephthalate (BHET), dimethyl terephthalate (DMT), other terephthalate derivatives, and terephthalamides.

The yield of the process of depolymerisation of polyethylene terephthalate is generally high. In some embodiments this yield is >60%. In some embodiments this yield is >70%. In some embodiments this yield is >80%. In some embodiments this yield is >90%.

In an embodiment, the process of depolymerisation of poly(ethylene terephthalate) comprises reacting a sample comprising poly(ethylene terephthalate) with a nucleophile, said nucleophile being in about 3 equivalent excess with respect to the poly(ethylene terephthalate) monomeric units, wherein the nucleophile is a compound of formula (I):

X-R₁-Y (I)

wherein:
X is selected from -OH, -SH and -NH₂;
Y is selected from H, -OH and -NH₂;
R₁ is selected from linear or branched C₁-C₈ alkylene, optionally having -O- or - NH- groups intercalated in the alkylene chain; C₆-C₁₀ arylene, optionally substituted with a C₁-C₄ alkyl; and (C₆-C₁₀)arylene(C₁-C₄)alkylene;
in the presence of:
   - a catalytic system comprising:
      - a N-containing organic base selected from the following: 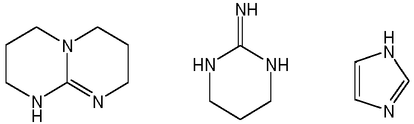 or any tautomeric form thereof, and
      - an alkaline or alkaline-earth metal organic or inorganic salt selected from NaOH, NaOMe, NaOEt, NaOPr NaOtBu, KOH, KOMe, KOEt, KOiPr KOtBu, LiOH, LiOMe, LiOEt, LiOiPr, LiOtBu and other alkaline or alkaline-earth hydroxides.
   - and an aprotic solvent selected from the group consisting of tetrahydrofuran, 1-methylimidazole, 2-methyltetrahydrofuran, dichloromethane, chloroform, dimethyl sulfoxide, acetophenone, propiophenone, methyl benzoate, methyl acetate and combinations thereof.

In an embodiment, the process of depolymerisation of poly(ethylene terephthalate) comprises reacting a sample comprising poly(ethylene terephthalate) with a nucleophile, said nucleophile being in about 3 equivalent excess with respect to the poly(ethylene terephthalate) monomeric units, wherein the nucleophile is a compound of formula (I):

X-R₁-Y (I)

wherein:
X is selected from -OH and -NH₂;
Y is selected from H, -OH and -NH₂;
R₁ is selected from linear or branched C₁-C₄ alkylene; C₆-C₁₀ arylene, optionally substituted with a C₁-C₄ alkyl; and (C₆-C₁₀)arylene(C₁-C₄)alkylene;
in the presence of:
   - a catalytic system comprising:
      - a N-containing organic base selected from the following: 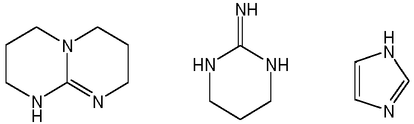 or any tautomeric form thereof, and
      - an alkaline or alkaline-earth metal organic or inorganic salt selected from NaOH, NaOMe, NaOtBu, KOH, KOMe, KOtBu, LiOH, LiOMe, LiOtBu and other alkaline or alkaline-earth hydroxides.
   - and an aprotic solvent selected from the group consisting of tetrahydrofuran, 1-methylimidazole, 2-methyltetrahydrofuran, dichloromethane, chloroform, dimethyl sulfoxide, acetophenone, propiophenone, methyl benzoate, methyl acetate and combinations thereof.

In a more particular embodiment, the process of depolymerisation of poly(ethylene terephthalate) comprises reacting a sample comprising poly(ethylene terephthalate) with a nucleophile, said nucleophile being in about 3 equivalent excess with respect to the poly(ethylene terephthalate) monomeric units, wherein the nucleophile is a compound of formula (I):

X-R₁-Y (I)

wherein:
X is selected from -OH;
Y is selected from H, -OH and -NH₂;
R₁ is selected from linear or branched C₁-C₄ alkylene;
in the presence of:
   - a catalytic system comprising:
      - a N-containing organic base selected from the following: 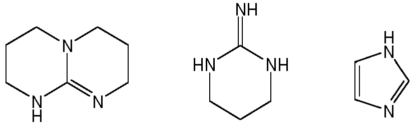 or any tautomeric form thereof, and
      - KOtBu as an alkaline metal organic salt.
   - and an aprotic solvent selected from the group consisting of tetrahydrofuran, 1-methylimidazole, chloroform, methyl benzoate and combinations thereof.

### EXAMPLES

The following examples are intended to illustrate but not limit the disclosed embodiments.

### Reagents and starting materials

Bottle grade PET pellets are PET waste provided by the company GAIKER and obtained from the grinding of disposed PET bottles (pellets of 1±0.5 cm).

Reagents and catalysts were purchased from Sigma Aldrich or Fisher Scientific. Solvents (technical grade) were purchased from Scharlab. All materials were used without further purification.

### Example 1. Reaction with methanol as nucleophile, THF as solvent and TBD as catalyst

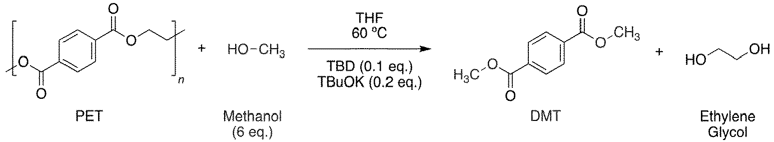

Bottle grade PET pellets (0.5 g, 2.604 mmol, 1 eq.), methanol (0.5 g, 15.625 mmol, 6 eq.), TBD (0.0365 g, 0.26 mmol, 0.1 eq.) and potassium tert-butoxide (0.0583 g, 0.52 mmol, 0.2 eq.) were mixed in 3 mL of anhydrous THF and charged in a vial which was immersed in an oil bath at 60 °C. Reaction was carried out under stirring and under atmospheric pressure at 60 °C. After 45 min, the crude product was cooled to room temperature and filtered to remove residual polymeric side-products before 6 mL of water was added. The mixture was kept under stirring for a minute before being stored at 8 °C overnight to precipitate dimethyl terephthalate (DMT). The so-formed crystals were collected and dried. This process afforded 0.46 g (91 % yield) of DMT. ¹H NMR (400 MHz, DMSO-*d₆*) δ (ppm) 8.08 (s, 4H), 3.89 (s, 6H).

### Example 2. Reaction with ethylene glycol as nucleophile, THF as solvent and TBD as catalyst

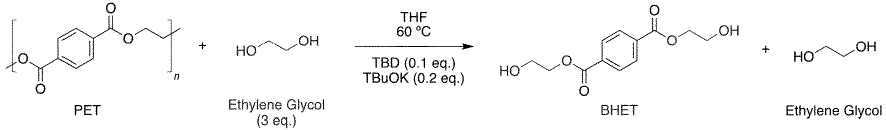

Different PET wastes (0.5 g, 2.604 mmol, 1 eq.), ethylene glycol (0.49 g, 7.81 mmol, 3 eq.), TBD (0.0365 g, 0.26 mmol, 0.1 eq.) and potassium tert-butoxide (0.0583 g, 0.52 mmol, 0.2 eq.) were mixed in 3 mL of anhydrous THF and charged in a vial which was immersed in an oil bath at 60 °C. Reaction was carried out under stirring and under atmospheric pressure at 60 °C. After 45 min, the crude product was cooled to room temperature and filtered to remove residual polymeric side-products before 6 mL of water was added. The mixture was kept under stirring for a minute before being stored at 8 °C overnight to precipitate bis(2-hydroxyethyl) terephthalate (BHET). The so-formed crystals were collected and dried. ¹H NMR (400 MHz, DMSO-*d₆*) δ (ppm) 8.11 (s, 4H), 4.98 (s, 2H), 4.32 (t, 4H), 3.73 (t, 3H).

**Table 1. Different batches of PET wastes employed for the depolymerization of PET depicted in Example 2, the corresponding quantity of product (BHET) and yield (%).**

| **Type of PET waste** | **BHET quantities (g)** | **BHET yield (%)** |
|---|---|---|
| Bottle grade PET | 0.602 | 91.2 |
| PET contaminated with aluminium | 0.562 | 89.1 |
| PET containing inorganic fillers | 0.598 | 90.8 |
| Coloured PET containing inorganic fillers | 0.604 | 91.3 |
| PET covered with laminar polyolefin | 0.593 | 89.6 |
| PET mixed with spandex (PU) in textile | 0.595 | 89.9 |

### Example 3. Reaction with ethanolamine as nucleophile, 1-methylimidazole as solvent and TBD as catalyst

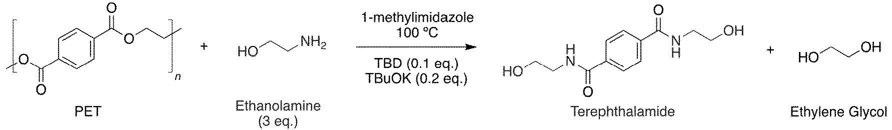

Bottle grade PET pellets (0.5 g, 2.604 mmol, 1 eq.), ethanolamine (0.477 g, 7.812 mmol, 3 eq.), TBD (0.0365 g, 0.26 mmol, 0.1 eq.) and potassium tert-butoxide (0.0583 g, 0.52 mmol, 0.2 eq.) were mixed in 4 mL of 1-methylimidazole and charged in a vial which was immersed in an oil bath at 100 °C. Reaction was carried out under stirring and under atmospheric pressure at 100 °C. After 20 min, the crude product was cooled to room temperature and filtered to remove residual polymeric side-products before 10 mL of DCM were added to precipitate bis(2-hydroxyethyl)terephthalamide. The obtained crystals were filtered and washed with DCM before being dried in an oven at 60 °C. This process provided 0.557 g (85 % yield) of bis(2-hydroxyethyl)terephthalamide. ¹H-NMR (400 MHz, DMSO-*d₆*) δ (ppm) 8.53 (s, 2H), 7.91 (s, 4H), 4.73 (t, 2H), 3.33 (q, 4H).

### Example 4. Reaction with ethylene glycol as nucleophile, chloroform as solvent and TBD as catalyst

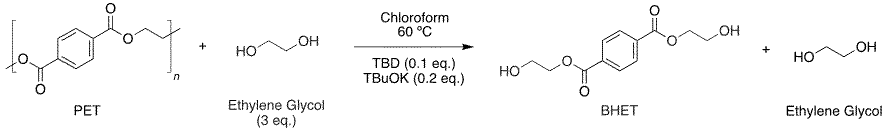

Bottle grade PET pellets (0.5 g, 2.604 mmol, 1 eq.), ethylene glycol (0.49 g, 7.81 mmol, 3 eq.), TBD (0.0365 g, 0.26 mmol, 0.1 eq.) and potassium tert-butoxide (0.0583 g, 0.52 mmol, 0.2 eq.) were mixed in 3 mL of chloroform anhydrous and charged in a vial which was immersed in an oil bath at 60 °C. Reaction was carried out under stirring and under atmospheric pressure at 60 °C. After 50 min, the crude product was cooled to room temperature and filtered to remove residual polymeric side-products before 6 mL of water was added. The mixture was kept under stirring for a minute before being stored at 8 °C overnight to precipitate bis(2-hydroxyethyl)terephthalate (BHET). The so-formed crystals were collected and dried. This process provided 0.518 g (79 % yield) of bis(2-hydroxyethyl) terephthalamide. ¹H NMR (400 MHz, DMSO-*d₆*) δ (ppm) 8.11 (s, 4H), 4.98 (s, 2H), 4.32 (t, 4H), 3.73 (t, 3H).

### Example 5. Reaction with ethylene glycol as nucleophile, THF as solvent and imidazole as catalyst

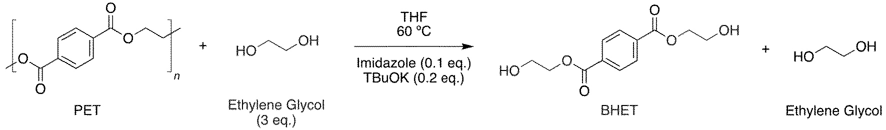

Bottle grade PET pellets (0.5 g, 2.604 mmol, 1 eq.), ethylene glycol (0.49 g, 7.81 mmol, 3 eq.), imidazole (0.0177 g, 0.26 mmol, 0.1 eq.) and potassium tert-butoxide (0.0583 g, 0.52 mmol, 0.2 eq.) were mixed in 3 mL of anhydrous THF and charged in a vial which was immersed in an oil bath at 60 °C. Reaction was carried out under stirring and under atmospheric pressure at 60 °C. After 2 h, the crude product was cooled to room temperature and filtered to remove residual polymeric side-products before 6 mL of water was added. The mixture was kept under stirring for a minute before being stored at 8 °C overnight to precipitate bis(2-hydroxyethyl) terephthalate (BHET). The so-formed crystals were collected and dried. This process afforded 0.380 g (58 % yield) of bis(2-hydroxyethyl) terephthalamide. ¹H NMR (400 MHz, DMSO-*d₆*) δ (ppm) 8.11 (s, 4H), 4.98 (s, 2H), 4.32 (t, 4H), 3.73 (t, 3H).

### Example 6. Reaction with ethylene glycol as nucleophile, THF as solvent and tetrahydropyrimidin-2(1H)-imine as catalyst

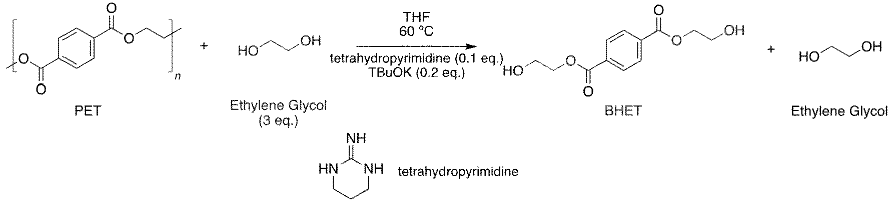

Bottle grade PET pellets (0.5 g, 2.604 mmol, 1 eq.), ethylene glycol (0.49 g, 7.81 mmol, 3 eq.), tetrahydropyrimidin-2(1H)-imine (0.0257 g, 0.26 mmol, 0.1 eq.) and potassium tert-butoxide (0.0583 g, 0.52 mmol, 0.2 eq.) were mixed in 3 mL of anhydrous THF and charged in a vial which was immersed in an oil bath at 60 °C. Reaction was carried out under stirring and under atmospheric pressure at 60 °C. After 1 h, the crude product was cooled to room temperature and filtered to remove residual polymeric side-products before 6 mL of water was added. The mixture was kept under stirring for a minute before being stored at 8 °C overnight to precipitate bis(2-hydroxyethyl) terephthalate (BHET). The so-formed crystals were collected and dried. This process afforded 0.445 g (68% yield) of bis(2-hydroxyethyl) terephthalamide. ¹H NMR (400 MHz, DMSO-*d₆*) δ (ppm) 8.11 (s, 4H), 4.98 (s, 2H), 4.32 (t, 4H), 3.73 (t, 3H).

## Claims

1. A process of depolymerisation of poly(ethylene terephthalate) comprising:
reacting a sample comprising poly(ethylene terephthalate) with a nucleophile, said nucleophile being in equivalent excess with respect to the poly(ethylene terephthalate) monomeric units,
wherein the nucleophile is a compound of formula (I):
X-R₁-Y (I)
wherein:
X is selected from -OH, -SH and -NH₂;
Y is selected from H, -OH, -SH and -NH₂;
R₁ is selected from linear or branched C₁-C₈ alkylene, optionally having -O- or - NH- groups intercalated in the alkylene chain; C₃-C₁₀ cycloalkylene, optionally substituted with at least one C₁-C₄ alkyl; C₃-C₁₀ heterocycloalkylene, optionally substituted with at least one C₁-C₄ alkyl; C₆-C₁₀ arylene, optionally substituted with a C₁-C₄ alkyl; C₆-C₁₀ heteroarylene, optionally substituted with a C₁-C₄ alkyl; (C₆-C₁₀)arylene(C₁-C₄)alkylene; and (C₃-C₁₀)cycloalkylene(C₁-C₄)alkylene;
in the presence of:
- a catalytic system comprising:
- a N-containing organic base, and
- an alkaline or alkaline-earth metal organic or inorganic salt,
- and an aprotic solvent.

2. The process according to claim 1, wherein R₁ in the nucleophile compound of formula (I) is selected from linear or branched C₁-C₄ alkylene, optionally having -O- or -NH-groups intercalated in the alkylene chain.

3. The process according to claims 1 or 2, wherein X is OH or NH₂, and Y is H, OH or NH₂.

4. The process according to any one of claim 1 to 3, wherein the nucleophile is selected from methanol, ethylene glycol and ethanolamine.

5. The process according to any one of claims 1 to 4, wherein the nucleophile is present in quantities from 1.5 to 6 equivalents per equivalent of poly(ethylene terephthalate) monomeric units, preferably in a quantity of about 3.0 equivalents per equivalent of poly(ethylene terephthalate) monomeric units.

6. The process according to any one of claims 1 to 5, wherein the N-containing organic base is selected from the following: 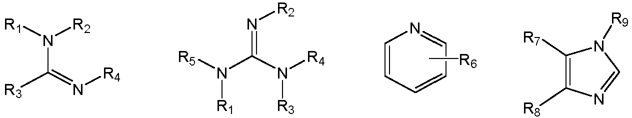 or any tautomeric form thereof,
wherein R₁, R₂, R₃, R₄ and R₅ are independently selected from H and linear or branched C₁-C₄ alkyl, C₁-C₄ alkoxyl, C₁-C₄ alkylamine, and wherein R₁ and R₃ and/or R₂ and R₄ can be bonded to form a heterocyclyl group;
R₆, R₇ and R₈ are independently selected from H, linear or branched C₁-C₄ alkyl, C₃-C₁₀ cycloalkyl, C₁-C₄ alkoxyl, C₁-C₄ alkylamine and C₆-C₁₀ aryl or R₇ and R₈ can be bonded to form a ring fused with the N-containing ring; and
R₉ is selected from H, linear or branched C₁-C₄ alkyl, C₁-C₄ alkoxyl and C₁-C₄ alkylamine.

7. The process according to claim 6, wherein R₁, R₂, R₃ and R₄ are independently a linear or branched C₁-C₄ alkyl group and wherein R₁ and R₃ and/or R₂ and R₄ are bonded to form a heterocyclyl group.

8. The process according to any one of claims 6 to 7, wherein the R₅, R₆, R₇ and R₈ are H.

9. The process according to any one of claims 1 to 8, wherein the N-containing organic base is selected from the following: 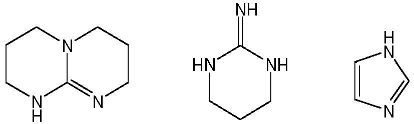 or any tautomeric form thereof.

10. The process according to any one of claims 1 to 9, wherein the N-containing organic base is present in quantities from 0.05 to 0.50 equivalents per equivalent of poly(ethylene terephthalate) monomeric units.

11. The process according to any one of claims 1 to 10, wherein the alkaline or alkaline-earth organic or inorganic base is selected from the group comprising NaOH, NaOMe, NaOEt, NaOPr NaOtBu, KOH, KOMe, KOEt, KOiPr KOtBu, LiOH, LiOMe, LiOEt, LiOiPr, LiOtBu, Rb(OH), RbOMe, RbOEt, RbOiPr, RbOtBu CsOH, CeOMe, CsOEt, CsO iPr, CsOtBu, Fr(OH), FrOMe, FrOEt, FrOiPr, FrOtBu, Be(OH)₂, Be(OMe)₂, Be(OEt)₂, Be(OiPr)₂, Be(OtBu)₂, Mg(OH)₂, Mg(OMe)₂, Mg(OEt)₂, Mg(OiPr)₂, Mg(OtBu)₂, Ca(OH)₂, Ca(OMe)₂, Ca(OEt)₂, Ca(OiPr)₂, Ca(OtBu)₂, Sr(OH)₂, Sr(OMe)₂, Sr(OEt)₂, Sr(OiPr)₂, Sr(OtBu)₂, Ba(OH)₂, Ba(OMe)₂, Ba(OEt)₂, Ba(OiPr)₂, Ba(OtBu)₂, Ra(OH)₂, Ra(OMe)₂, Ra(OEt)₂, Ra(OiPr)₂, Ra(OtBu)₂, and combinations thereof.

12. The process according to any one of claims 1 to 11, wherein the alkaline or alkaline-earth organic or inorganic base is present in quantities from 0.1 to 0.8 equivalents per equivalent of poly(ethylene terephthalate) monomeric units.

13. The process according to any one of claims 1 to 12, wherein the aprotic solvent is selected from the group consisting of tetrahydrofuran, 1-methylimidazole, 2-methyltetrahydrofuran, dichloromethane, chloroform, dimethyl sulfoxide, acetophenone, propiophenone, methyl benzoate, methyl acetate and combinations thereof.

14. The process according to any one of claims 1 to 13, wherein the reaction takes place at a temperature between 15 and 100°C.

15. The process according to any one of claims 1 to 14, wherein the reaction takes place from 5 min to 5 h.

## Patentansprüche

1. Verfahren zur Depolymerisation von Poly(ethylenterephthalat), umfassend:
Umsetzen einer Probe, die Poly(ethylenterephthalat) umfasst, mit einem Nukleophil, wobei das Nukleophil in Bezug auf die monomeren Einheiten Poly(ethylenterephthalat) einen äquivalenten Überschuss aufweist,
wobei das Nukleophil eine Verbindung der Formel (I) ist:
X-R₁-Y (I)
wobei:
X wird aus -OH, -SH und -NH₂ ausgewählt;
Y wird aus H, -OH, -SH und -NH₂ ausgewählt;
R₁ wird ausgewählt aus linearem oder verzweigtem C₁-C₈-Alkylen, wobei optional -O- oder -NH-Gruppen in der Alkylenkette interkaliert sind; C₃-C₁₀-Cycloalkylen, optional substituiert mit mindestens einem C₁-C₄-Alkyl; C₃-C₁₀-Heterocycloalkylen, optional substituiert mit mindestens einem C₁-C₄-Alkyl; C₆-C₁₀-Arylen, optional substituiert mit einem C₁-C₄-Alkyl, C₆-C₁₀-Heteroarylen, optional substituiert mit einem C₁-C₄-Alkyl, (C₆-C₁₀)Arylen(C₁-C₄)alkylen; und (C₃-C₁₀)Cycloalkylen (C₁-C₄)alkylen;
in Gegenwart von:
- einem katalytischen System, umfassend:
- eine N-haltige organische Base, und
- ein organisches oder anorganisches Alkali- oder Erdalkalimetallsalz,
- und ein aprotisches Lösungsmittel.

2. Verfahren nach Anspruch 1, wobei R₁ in der nukleophilen Verbindung der Formel (I) aus linearen oder verzweigten C₁-C₄-Alkylen ausgewählt ist, wobei optional -O- oder -NH-Gruppen in der Alkylenkette interkaliert sind.

3. Verfahren nach Anspruch 1 oder 2, wobei X OH oder NH₂ und Y H, OH oder NH₂ ist.

4. Verfahren nach einem der Ansprüche 1 bis 3, wobei das Nukleophil aus Methanol, Ethylenglykol und Ethanolamin ausgewählt ist.

5. Verfahren nach einem der Ansprüche 1 bis 4, wobei das Nukleophil in Mengen von 1,5 bis 6 Äquivalenten pro Äquivalent von monomeren Poly(ethylenterephthalat)-Einheiten vorliegt, vorzugsweise in einer Menge von etwa 3,0 Äquivalenten pro Äquivalent von monomeren Poly(ethylenterephthalat)-Einheiten.

6. Verfahren nach einem der Ansprüche 1 bis 5, wobei die N-haltige organische Base aus folgendem ausgewählt ist: 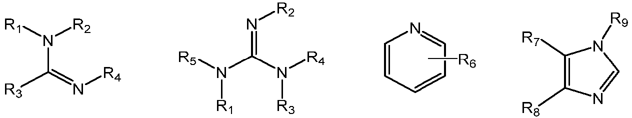 oder eine tautomere Form davon,
wobei R₁, R₂, R₃, R₄ und R₅ unabhängig voneinander ausgewählt sind aus H und linearem oder verzweigtem C₁-C₄-Alkyl, C₁-C₄-Alkoxyl, C₁-C₄-Alkylamin, und wobei R₁ und R₃ und/oder R₂ und R₄ gebunden werden können, um eine Heterocyclylgruppe zu bilden;
R₆, R₇ und R₈ sind unabhängig voneinander ausgewählt aus H, linearem oder verzweigtem C₁-C₄-Alkyl, C₃-C₁₀-Cycloalkyl, C₁-C₄-Alkoxyl, C₁-C₄-Alkylamin und C₆-C₁₀-Aryl oder R₇ und R₈ können gebunden werden, um einen Ring zu bilden, der mit dem N-haltigen Ring verschmolzen ist; und
R₉ ist ausgewählt aus H, linearem oder verzweigtem C₁-C₄-Alkyl, C₁-C₄-Alkoxyl und C₁-C₄-Alkylamin.

7. Verfahren nach Anspruch 6, wobei R₁, R₂, R₃ und R₄ unabhängig voneinander eine lineare oder verzweigte C₁-C₄-Alkylgruppe sind und wobei R₁ und R₃ und/oder R₂ und R₄ verbunden sind um eine Heterocyclylgruppe zu bilden.

8. Verfahren nach einem der Ansprüche 6 bis 7, wobei R₅, R₆, R₇ und R₈ H sind.

9. Verfahren nach einem der Ansprüche 1 bis 8, wobei die N-haltige organische Base aus folgendem ausgewählt ist: 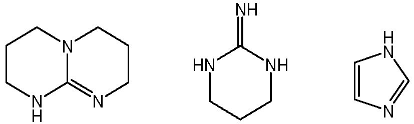 oder eine tautomere Form davon.

10. Verfahren nach einem der Ansprüche 1 bis 9, wobei die N-haltige organische Base in Mengen von 0,05 bis 0,50 Äquivalenten pro Äquivalent monomerer Einheiten von Poly(ethylenterephthalat) vorliegt.

11. Verfahren nach einem der Ansprüche 1 bis 10, wobei die alkalische oder erdalkalische organische oder anorganische Base ausgewählt ist aus der Gruppe umfassend NaOH, NaOMe, NaOEt, NaOPr NaOtBu, KOH, KOMe, KOEt, KOiPr KOtBu, LiOH, LiOMe, LiOet, LiOiPr, LiOtBu, Rb(OH), RbOMe, RbOEt, RbOiPr, RbOtBu CsOH, CeOMe, CsOEt, CsO iPr, CsOtBu, Fr(OH), FrOMe, FrOEt, FrOiPr, FrOtBu, Be(OH)₂, Be(OMe)₂, Be(OEt)₂, Be(OiPr)₂, Be(OtBu)₂, Mg(OH)₂, Mg(OMe)₂, Mg(OEt)₂, Mg(OiPr)₂, Mg(OtBu)₂, Ca(OH)₂, Ca(OMe)₂, Ca(OEt)₂, Ca(OiPr)₂, Ca(OtBu)₂, Sr(OH)₂, Sr(OMe)₂, Sr(OEt)₂, Sr(OiPr)₂, Sr(OtBu)₂, Ba(OH)₂, Ba(OMe)₂, Ba(OEt)₂, Ba(OiPr)₂, Ba(OtBu)₂, Ra(OH)₂, Ra(OMe)₂, Ra(OEt)₂, Ra(OiPr)₂, Ra(OtBu)₂ und Kombinationen davon.

12. Verfahren nach einem der Ansprüche 1 bis 11, wobei die alkalische oder erdalkalische organische oder anorganische Base in Mengen von 0,1 bis 0,8 Äquivalenten pro Äquivalent von monomeren Poly(ethylenterephthalat)-Einheiten vorliegt.

13. Verfahren nach einem der Ansprüche 1 bis 12, wobei das aprotische Lösungsmittel ausgewählt ist aus der Gruppe bestehend die aus Tetrahydrofuran, 1-Methylimidazol, 2-Methyltetrahydrofuran, Dichlormethan, Chloroform, Dimethylsulfoxid, Acetophenon, Propiophenon, Methylbenzoat, Methylacetat und Kombinationen davon.

14. Verfahren nach einem der Ansprüche 1 bis 13, wobei die Reaktion bei einer Temperatur zwischen 15 und 100 °C stattfindet.

15. Verfahren nach einem der Ansprüche 1 bis 14, wobei die Reaktion von 5 min bis 5 h stattfindet.

## Revendications

1. Procédé de dépolymérisation du poly(éthylène téréphtalate) comprenant :
réaction d'un échantillon comprenant du poly(éthylène téréphtalate) avec un nucléophile, ledit nucléophile étant en excès d'équivalent par rapport aux unités monomériques de poly(éthylène téréphtalate),
dans lequel le nucléophile est un composé de la formule (I) :
X-R₁-Y (1)
dans lequel :
X est choisi parmi -OH, -SH et -NH₂;
Y est choisi parmi H, -OH, -SH et - NH₂ ;
R₁ est choisi parmi alkylène en C₁-C₈ linéaire ou ramifié, comprenant éventuellement des groupes -O- ou - NH- intercalés dans la chaîne alkylène ; cycloalkylène en C₃-C₁₀, éventuellement substitué par au moins un alkyle en C₁-C₄ ; les hétérocycloalkylène en C₃-C₁₀, éventuellement substitué par au moins un alkyle en C₁-C₄ ; arylène en C₆-C₁₀, éventuellement substitué par un alkyle en C₁-C₄ ; hétéroarylène en C₆-C₁₀, éventuellement substitué par un alkyle en C₁-C₄ ; (C₆-C₁₀)arylène(C₁-C₄)alkylène ; et (C₃-C₁₀)cycloalkylène(C₁-C₄)alkylène ;
en présence de :
- un système catalytique comprenant :
- une base organique contenant de l'azote, et
- un sel organique ou inorganique de métal alcalin ou alcalino-terreux,
- et un solvant aprotique.

2. Procédé selon la revendication 1, dans lequel R₁ dans le composé nucléophile de formule (I) est choisi parmi les alkylènes en C₁-C₄ linéaires ou ramifiés, comprenant éventuellement des groupes -O- ou -NH- intercalés dans la chaîne alkylène.

3. Procédé selon les revendications 1 ou 2, dans lequel X est OH ou NH₂, et Y est H, OH ou NH_{2.}

4. Procédé selon l'une quelconque des revendications 1 à 3, dans lequel le nucléophile est choisi parmi le méthanol, l'éthylène glycol et l'éthanolamine.

5. Procédé selon l'une quelconque des revendications 1 à 4, dans lequel le nucléophile est présent en quantités de 1,5 à 6 équivalents par équivalent d'unités monomériques de poly(éthylène téréphtalate), de préférence en une quantité d'environ 3.0 équivalents par équivalent d'unités monomériques de poly(éthylène téréphtalate).

6. Procédé selon l'une quelconque des revendications 1 à 5, dans lequel la base organique contenant de l'azote est choisie parmi les suivantes : 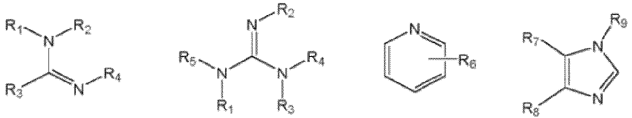 ou toute forme tautomérique de celle-ci,
dans laquelle R₁, R₂, R₃, R₄ et R₅ sont choisis indépendamment parmi H et alkyle en C₁-C₄ linéaire ou ramifié, alcoxyle en C₁-C₄, alkylamine en C₁-C₄, et dans laquelle R₁ et R₃ et/ou R₂ et R₄ peuvent être liés pour former un groupe hétérocyclil ;
R₆, R₇ et R₈ sont indépendamment choisis parmi H, alkyle en C₁-C₄ linéaire ou ramifié, cycloalkyle en C₃-C₁₀, alcoxyle en C₁-C₄, alkylamine en C₁-C₄ et aryle en C₆-C₁₀ ou R₇ et R₈ peuvent être liés pour former un cycle fusionné avec le cycle contenant N ; et
R₉ est choisi parmi H, alkyle en C₁-C₄ linéaire ou ramifié, alcoxyle en C₁-C₄ et alkylamine en C₁-C₄.

7. Procédé selon la revendication 6, dans lequel R₁, R₂, R₃ et R₄ sont indépendamment un groupe alkyle en C₁-C₄ linéaire ou ramifié et dans lequel R₁ et R₃ et/ou R₂ et R₄ sont liés pour former un groupe hétérocyclyle.

8. Procédé selon l'une quelconque des revendications 6 à 7, dans lequel R₅, R₆, R₇ et R₈ sont H.

9. Procédé selon l'une quelconque des revendications 1 à 8, dans lequel la base organique contenant de l'azote est choisie parmi les suivantes : 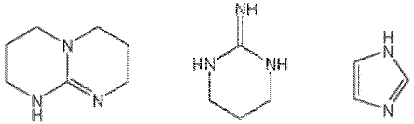 ou toute forme tautomérique de celle-ci.

10. Procédé selon l'une quelconque des revendications 1 à 9, dans lequel la base organique contenant de l'azote est présente en quantités de 0,05 à 0,50 équivalents par équivalent d'unités monomériques de poly(éthylène téréphtalate).

11. Procédé selon l'une quelconque des revendications 1 à 10, dans lequel la base organique ou inorganique alcaline ou alcalino-terreuse est choisie dans le groupe comprenant NaOH, NaOMe, NaOEt, NaOPr NaOtBu, KOH, KOMe, KOEt, KOiPr KOtBu, LiOH, LiOMe, LiOEt, LiOiPr, LiOtBu, Rb(OH), RbOMe, RbOEt, RbOiPr, RbOtBu CsOH, CeOMe, CsOEt, CsO iPr, CsOtBu, Fr(OH), FrOMe, FrOEt, FroiPr, FrOtBu, Be(OH)₂, Be(OMe)₂, Be(OEt)₂, Be(OiPr)₂, Be(OtBu)₂, Mg(OH)₂, Mg(OMe)₂, Mg(OEt)₂, Mg(OiPr)₂, Mg(OtBu)₂, Ca(OH)₂, Ca(OMe)₂, Ca(OEt)₂, Ca(OiPr)₂, Ca(OtBu)₂, Sr(OH)₂, Sr(OMe)₂, Sr(OEt)₂, Sr(OiPr)₂, Sr(OtBu)₂, Ba(OH)₂, Ba(OMe)₂, Ba(OEt)₂, Ba(OiPr)₂, Ba(OtBu)₂, Ra(OH)₂, Ra(OMe)₂, Ra(OEt)₂, Ra(OiPr)₂, Ra(OtBu)₂, et des combinaisons de ceux-ci.

12. Procédé selon l'une quelconque des revendications 1 à 11, dans lequel la base organique ou inorganique alcaline ou alcalino-terreuse est présente en quantités de 0,1 à 0,8 équivalents par équivalent d'unités monomériques de poly(éthylène téréphtalate).

13. Procédé selon l'une quelconque des revendications 1 à 12, dans lequel le solvant aprotique est choisi dans le groupe constitué par tétrahydrofurane, 1-méthylimidazole, 2-méthyltétrahydrofurane, dichlorométhane, chloroforme, sulfoxyde de diméthyle, acétophénone, propiophénone, benzoate de méthyle, acétate de méthyle et leurs combinaisons.

14. Procédé selon l'une quelconque des revendications 1 à 13, dans lequel la réaction a lieu à une température comprise entre 15 et 100°C.

15. Procédé selon l'une quelconque des revendications 1 à 14, dans lequel la réaction a lieu entre 5 minutes et 5 heures.
